Europäisches Patentamt

European Patent Office

Office européen des brevets

(11) Publication number: **0 248 823**
**B1**

# EUROPEAN PATENT SPECIFICATION

(45) Date of publication of patent specification: **19.12.90**

(51) Int. Cl.⁵: **G 01 J 5/08**

(21) Application number: **86906525.0**

(22) Date of filing: **25.09.86**

(86) International application number:
**PCT/US86/02014**

(87) International publication number:
**WO 87/03681 18.06.87 Gazette 87/13**

(54) OPTICAL SENSING SYSTEM.

(30) Priority: **11.12.85 US 807574**

(43) Date of publication of application:
**16.12.87 Bulletin 87/51**

(45) Publication of the grant of the patent:
**19.12.90 Bulletin 90/51**

(84) Designated Contracting States:
**DE FR GB SE**

(56) References cited:
**DE-A-1 965 069**
**DE-A-3 235 250**
**DE-B-1 151 955**
**FR-A-1 496 458**
**FR-A-2 270 607**
**US-A-3 465 149**
**US-A-4 322 124**

(73) Proprietor: **Hughes Aircraft Company**
**7200 Hughes Terrace P.O. Box 45066**
**Los Angeles, California 90045-0066 (US)**

(72) Inventor: **KLEIN, James, E.**
**1377 East Windsor Road, 317**
**Glendale, CA 91205 (US)**

(74) Representative: **Kuhnen, Wacker & Partner**
**Schneggstrasse 3-5 Postfach 1553**
**D-8050 Freising (DE)**

Courier Press, Leamington Spa, England.

**Description**

Technical Field

The present invention generally relates to optical sensing systems, and particularly relates to infrared sensing systems which utilize a curved diffraction limited germanium window or lens.

Background of the Invention

Many sub-sonic aircrafts, such as helicopters, use or will be using infrared optical sensing systems. In this application, a pod or turret containing an infrared sensor is mounted on the aircraft. Servo-mechanisms are used to rotate or otherwise articulate the pod to permit the sensor's field of view to be orientated in a variety of directions.

For protection from the airstream, the sensor is usually mounted behind the pod or turret flat window. The use of a flat window, however, creates a significant aerodynamic drag on the pod which can make movement of the pod difficult at high speeds. Accordingly, the use of a curved rather than a flat window in this airborne optical application is very desirable from a reduced aerodynamic drag viewpoint. A reduction in the aerodynamic drag would not only reduce the torque needed to be produced by the pod servo-mechanism, but would also reduce the amount of fuel consumed by the aircraft. Additionally, a lower aerodynamic drag would reduce the mechanical vibrations on the pod or turret.

In spite of these mechanical advantages, the use of a curved window introduces difficult optical problems for the sensor. These problems include the optical power of the curved window and the aberrations of a window. One approach to solving these optical problems would be to try to have the sensor compensate for the optically induced aberrations in the curved window. However, this approach is undesirable because it will require complex and costly modifications to the sensor.

Another prior approach to solving these problems was the use of a curved window design consisting of a hemi-spherical germanium shell. This window possessed weak negative optical power, spherical aberration, coma and chromatic aberration. Additionally, when the optical axis of the sensor was positioned along a line which did not pass through the center of the hemispherically dome, the dome also introduced axial coma. While the use of germanium as the window material could reduce the chromatic aberration to acceptable levels, correction of the defocus and remaining aberrations would still have to be accomplished through complex and costly design modifications of the sensor.

A further possibility to overcome these problems is to provide a curved window consisting of a negative miniscus lens instead of a hemispherically germanium lens. Such a device is for example described in US—4 322 124. In order to obtain a wide field of view as seen through the lens which remains essentially constant over a large angular field said miniscus lens is designed to have an internal surface which is nearest to the detector assembly having a curvature of a relatively smaller radius as compared to the radius of the curvature of the external surface of the lens. The center of curvature of both lens surfaces lie on the side of the lens nearest said detector along the axis intersecting the lens and the detector. The problem of such a device is that there is no possibility for compensating for chromatic and spherical aberrations of said meniscus lens.

It is therefore the object of the present invention to provide a detector assembly in conjunction with a curved window wherein chromatic and spherical aberrations are minimized.

This object is solved by an apparatus in accordance with claim 1 and a method in accordance with claim 7.

In more detail, this object is solved by utilizing certain parametric changes to the hemispherical germanium shell of the window. These parametric changes compensate for the optical aberrations which would otherwise make it difficult for a sensor to see through the window.

These parameric changes are determined through a process which optimizes the optical design of the curved window. This process may conveniently utilize conventional optical design computer programs which will calculate the ray traces through the window. The object of the process is to minimize the bend in the ray aberrations as they pass through the window. Aside from basic information about the window, such as a starting inner radius of curvature, the rays themselves need to be defined. The directions for a set of meriodional and skew rays (e.g., 20) need to be defined over the field of view for the aperture of the sensor. The angles of the rays after they have passed through the window will be calculated. The variables from these calculations, such as the conic constant and the aspheric terms, can then be changed to minimize the differences between target and actual values for the ray traces using a damped least squares analysis. The terms which result from this procedure, such as the inner radius of curvature, the conic constant and the aspheric constants, can then be employed in an equation which will describe the window's surface profile for machining.

Summary of the Invention

The present invention provides an optical sensing system which generally is comprised of an infrared optical sensor, and a curved diffraction-limited window disposed in front of the sensor such that the optical axis of the sensor is parallel to and displaced from the symmetry axis of the window. The window has an inner radius of curvature which is non-concentric with the outer radius in order to remove the optical power of the window. Additionally, the window is provided with an aspheric outer surface which has a profile so as to correct for aberrations in the window. The window is made out of germanium and is thus particularly useful for a sensor which has an 8—12 µm wavelength band. With such a diffraction limited window, the optical system will be much more suited for high speed airborne applications (e.g., 200—600 mph 1 mph = 1.609 km/h). Additionally, this window design will eliminate the need for optical aberrations being corrected within the optical sensor, and thus facilitate the retro-fitting of existing aircraft pods with optical systems according to the present invention.

Additional advantages and features of the present invention will become apparent from a reading of the detailed description of the preferred embodiments which make reference to the following set of drawings:

Brief Description of the Drawings

Figure 1 is a diagrammatic side view of an optical sensing system according to the present invention.

Figure 2 illustrates a computer model of the optical sensing system shown in Figure 1.

Figure 3 is a diagrammatic side view of an additional embodiment of an optical sensing system according to the present invention.

Figure 4 is an illustration of a computer model for the optical sensing system shown in Figure 3.

Detailed Description of the Preferred Embodiments

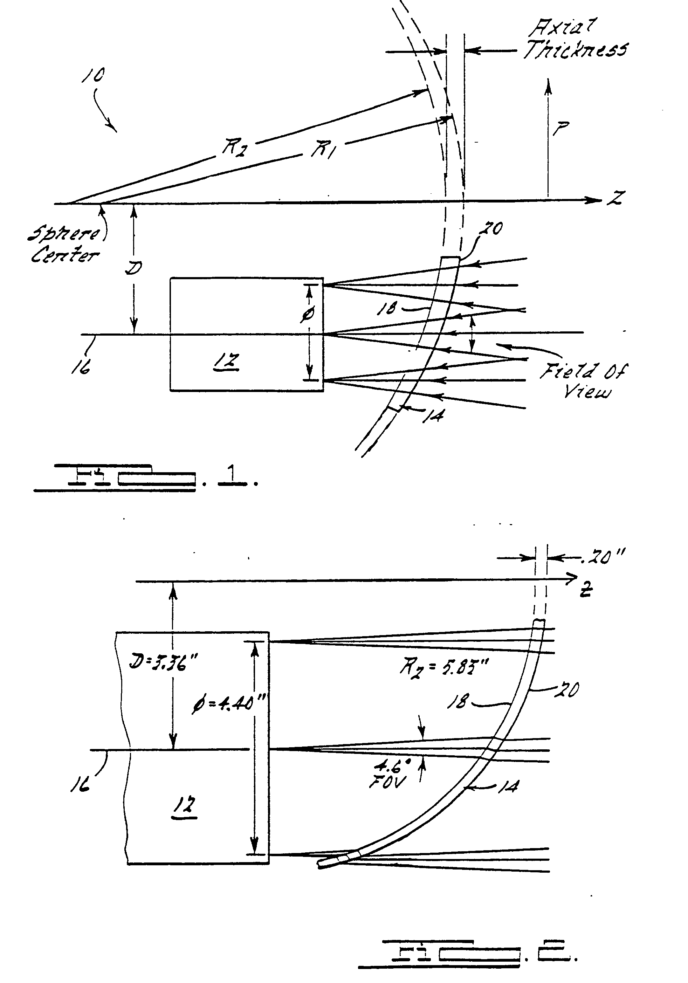

Referring to Figure 1, a diagrammatic side view of an optical sensing system 10 according to the present invention is shown. The optical system 10 generally comprises an infrared sensor 12 and a generally spherically curved window 14. The sensor 12 has an infrared radiation detection band width in the 8—12 µm range. The optical sensor 12 also has an aperture $\phi$ which looks through a portion of the curved window 14. The sensor 12 also has a center optical axis 16 which is parallel to the symmetry axis "Z" of the curved window 14. The optical axis 16 of the sensor 12 is also displaced laterally from the window symmetry axis Z of the window 14 by a distance "D". Thus, the sensor 12 is positioned off-axis from the symmetry axis Z of the window 14. The curved window 14 is preferably made out of germanium due to its low optical dispersion in the 8—12 µm infrared radiation band. The window 14 has an inner radius of curvature $R_2$ and an outer radius of curvature $R_1$.

In accordance with one embodiment of the present invention, the spherical shell of the window 14 is provided with certain parametric changes which are symmetric with respect to the axis Z of the window. The first of these changes relates to the inner surface 18 of the window 14. The radius of curvature $R_2$ of the inner surface 18 is changed slightly from a state of concentricity with the outer surface 20 to a curvature which will yield a zero optical power lens. Accordingly, the thickness of the window 14 will vary slightly from the center of the window to the edges of the window based upon this change. The term optical power refers to the inverse of the focal length of the lens or window.

The other parametric change to an otherwise concentric spherical window shell relates to the outer surface 20 of the window 14. The outer surface 20 is provided with a profile which will change the surface from a sphere to an asphere in order to correct for aberrations. The surface profile of the outer surface 20 (radius $R_1$) is given by the equation below.

$$Z = \frac{\rho^2}{R\left[1 - (K + 1)\dfrac{\rho^2}{R^2}\right]} + d\rho^4 + e\rho^6 + f\rho^8 + g\rho^{10}$$

In all cases, the conic constant "K" will be non-zero. Depending upon the relative values of D and $\phi$ compared with $R_1$ and $R_2$, some of the general aspheric coefficients may be able to be set to zero and still result in a diffraction limited window. Larger relative apertures of the sensor and larger relative offsets from the symmetry axis Z of the window will require higher order aspheric terms for acceptable aberration correction.

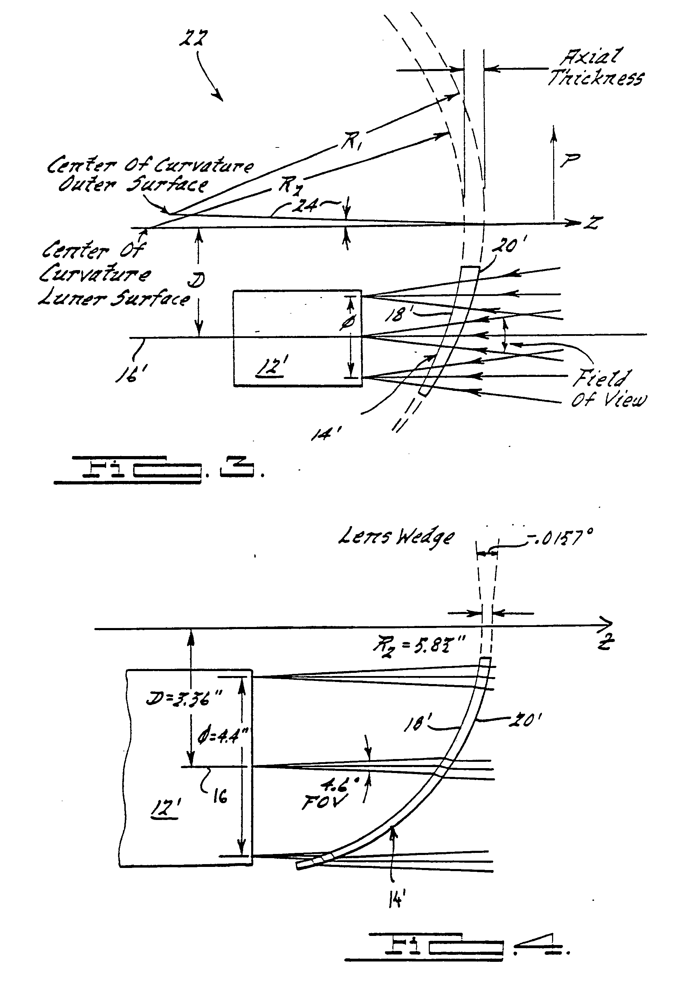

Referring to Figure 2, a computer model of the off-axis optical sensing system 10 is shown. In particular, Figure 2 shows ray traces for infrared radiation being received at the top, bottom and center of the sensor field of view. The general asphere terms described by the equation above are set forth below:

R = 5.980
K = −.00164
d = −.15261E—7
e = −.29170E—8
f = 0
g = 0

Referring to Figure 3, an alternative embodiment of an off-axis optical sensing system 22 according to the present invention is shown. In this embodiment, not all of the parametric changes to the concentric spherical shell of the window 14' are symmetric with respect to the symmetry axis Z' passing through the spherical center of the window. Due to the similarity between the embodiments of Figures 1 and 3, similar components used in these Figures are primed in Figures 3 and 4. As in the case of the embodiment shown in Figure 1, the radius of curvature R'$_2$ for the inner surface 18' is modified to yield a zero power lens. However in contrast with the previous embodiment, the optical system 22 provides only a point-testable conic profile to the outer surface 20' of the window 14'. The outer surface profile is characterized by the equation set forth below:

$$Z = \frac{\rho^2}{R\,[1 - (K + 1)\dfrac{\rho^2}{R^2}]} ; K \leq 0$$

In place of the general aspheric terms used in the equation for the first embodiment, a wedge 24 is built into the curved window 14'. The wedge 24 and the conic profile are used for aberration minimization. The wedge 24 is indicated in Figure 3 by the fact that the optical axis of symmetry for the outer surface 20' does not coincide with the optical axis of symmetry for the inner surface 18'. Accordingly, the centers of curvature for the inner and outer surfaces will not be at the same point. The wedge 24 introduces aberrations which will counter the aberrations in a concentric window. For example, the wedge 24 will introduce coma which will counter the coma terms which are inherent in the concentric shell. As in the case of Figure 2, Figure 4 illustrates a computer model of the optical system 22. The point-testable conic terms described in the equation above are set forth below:

R = 5.975
K = −.00164

It will be appreciated by those skilled in the art that the non-spherical surface profiles described above can be generated using current precision diamond machining techniques. Either direct probe measurements (accurate to λ/2 in the visible), or null-lens tests are available to test these non-spherical profiles. Additionally, it should be noted that optical design computer programs are commercially available for solving the equations set forth above, and for determining the change in the inner radius of curvature which will yield a zero optical power lens. Such optical design computer programs include "Code V" by Optical Research Associates, Pasadena, California and "ACCOS V", by Scientific Calculations, Fishers, N.Y.

The various embodiments which have been set forth above were for the purpose of illustration and were not intended to limit the invention. It will be appreciated by those skilled in the art that various changes and modifications may be made to these embodiments described in this specification without departing from the scope of the invention as defined by the appended claims.

## Claims

1. An optical sensing system (10) comprising: an infrared sensor (12) having an associated aperture; a curved diffraction-limited window (14) disposed in front of the aperture of said sensor (12), said window having an inner radius of curvature (R2) which is not concentric with an outer radius of curvature (R1) of said window, characterized in that the symmetry axis of said sensor (16) is parallel to and displaced from the optical axis of said window for minimizing the optical power of said window, and said window has an aspheric outer surface (20).

2. The optical system according to claim 1, wherein said sensor (12) has an 8—12 μm wavelength radiation detection band width.

3. The optical system according to claim 2, wherein said window (14) is made of germanium.

4. The optical system according to claim 3, wherein said aspheric outer surface (20) of said window (14) is symmetric with respect to said symmetry axis of said window (14).

5. The optical system according to claim 3, wherein the degree of non-concentricity between said inner radius (R2) and outer radius (R1) of curvature of said window (14) is sufficient to remove the optical power from said window.

6. The optical system according to claim 3, where said aspheric outer surface (20) of said window (14) has a profile to correct for optical aberrations in said window.

7. A method of compensating for optically induced aberrations, comprising the steps of: providing a curved window (14); modifying an inner radius of curvature (R2) of said window (14) so that said inner radius of curvature is not concentric with an outer radius of curvature (R1) in order to minimize the optical power of said window, characterized in further comprising the step of modifying an outer surface (20) of said window so as to provide an aspheric outer surface for said window which will compensate for optically induced aberrations in said window.

## Patentansprüche

1. Optisches Abtastsystem (10) mit: einem Infrarotsensor (12), welcher eine zugehörige Apertur aufweist; einem gekrümmten beugungsbegrenzten Fenster (14), welches in Front der Apertur des Sensors (12) angeordnet ist, wobei das Fenster einen inneren Krümmungsradius (R2) aufweist, welcher mit einem äußeren Krümmungsradius (R1) des Fensters nicht konzentrisch ist, dadurch gekennzeichnet, daß die Symmetrieachse des Sensors (16) parallel zu und verschoben von der optischen Achse des Fensters ist, um das Brechungsvermögen des Fensters zu minimieren, und das Fenster eine asphärische äußere Oberfläche (20) aufweist.

2. Das optische System nach Anspruch 1, worin der Sensor (12) eine Wellenlängenstrahlungs-detektionsbandbreite von 8—12 µm aufweist.

3. Das optische System nach Anspruch 2, worin das Fenster (14) aus Germanium hergestellt ist.

4. Das optische System nach Anspruch 3, worin die asphärische äußere Oberfläche (20) des Fensters (14) symmetrisch bezüglich der Symmetrieachse des Fensters (14) ist.

5. Das optische System nach Anspruch 3, worin der Betrag an Nicht-Konzentrizität zwischen dem inneren (R2) und äußeren (R1) Krümmungsradius des Fensters (14) ausreichend ist, das Brechungs-vermögen des Fensters zu entfernen.

6. Das optische System nach Anspruch 3, worin die asphärische äußere Oberfläche (20) des Fensters (14) ein Profil aufweist, um die optischen Aberrationen in dem Fenster zu korrigieren.

7. Ein Verfahren zum Kompensieren von optisch induzierten Aberrationen, welches die Schritte aufweist: Bereitstellen eines gekrümmenten Fensters (14); Modifizieren eines inneren Krümmungsradiuses (R2) des Fensters (14), so daß der innere Krümmungsradius mit einem äußeren Krümmungsradius (R1) nicht konzentrisch ist, um das Brechungsvermögen des Fensters zu minimieren, dadurch gekennzeichnet, daß es des weiteren den Schritt beinhaltet: Modifizieren einer äußeren Oberfläche (20) des Fensters, so daß eine asphärische äußere Oberfläche für das Fenster bereitgestellt wird, welche optisch induzierte Aberrationen in dem Fenster kompensiert.

**Revendications**

1. Système de détection optique (10) comprenant: un capteur (12) d'infrarouge ayant une ouverture associée; une fenêtre incurvée (14) à diffraction limitée disposée en avant de l'ouverture du capteur (12), ladite fenêtre ayant un rayon intérieur de courbure (R2) qui n'est pas concentrique avec un rayon extérieur de courbure (R1) de ladite fenêtre, caractérisé en ce que l'axe de symétrie dudit capteur (16) est parallèle à, et décalé de, l'axe optique de ladite fenêtre (1) pour minimiser la puissance optique de ladite fenêtre; et ladite fenêtre présente une surface extérieure asphérique (20).

2. Système optique selon la revendication 1, dans lequel ledit capteur (12) présente une largeur de bande de détection de rayonnement d'une longueur d'onde de 8—12 micromètres.

3. Système optique selon la revendication 2, dans lequel ladite fenêtre (14) est réalisée en germanium.

4. Système optique selon la revendication 3, dans lequel ladite surface extérieure asphérique (20) de ladite fenêtre (14) est symétrique par rapport audit axe de symétrie de ladite fenêtre (14).

5. Système optique selon la revendication 3, dans lequel le degré de non-concentricité entre ledit rayon intérieur (R2) et ledit rayon extérieur (R1) de courbure de ladite fenêtre (14) est suffisant pour éliminer la puissance optique de ladite fenêtre.

6. Système optique selon la revendication 3, dans lequel ladite surface extérieure asphérique de ladite fenêtre (14) présente un profil destiné à corriger des aberrations optiques dans ladite fenêtre.

7. Procédé de compensation d'aberrations d'origine optique, comprenant les étapes qui consistent: à utiliser une fenêtre incurvée (14); à modifier un rayon intérieur de courbure (R2) de ladite fenêtre (14) afin que ledit rayon intérieur de courbure ne soit pas concentrique avec un rayon extérieur de courbure (R1) pour minimiser la puissance optique de ladite fenêtre; caractérisé en ce qu'il comprend en outre l'étape consistant à modifier une surface extérieure (20) de ladite fenêtre afin de donner une surface extérieure asphérique à ladite fenêtre, qui compense des aberrations d'origine optique dans ladite fenêtre.

FIG. 1.

FIG. 2.

22

Axial
Thickness

$R_1$

Center Of Curvature
Outer Surface

$R_2$

24

P

Z

Center Of
Curvature
Inner Surface

D

20'

18'

Ø

12'

Field
Of View

16'

14'

FIG. 3.

Lens Wedge

-.0157°

Z

$R_2 = 5.87''$

D = 3.36''

18'

20'

Ø = 4.4''

12'

16

4.6°
FOV

14'

FIG. 4.